# EUROPÄISCHE PATENTSCHRIFT

(11) **EP 3 436 545 B1**
(45) Veröffentlichungstag und Bekanntmachung des Hinweises auf die Patenterteilung: **03.06.2020**
(21) Anmeldenummer: 16717578.5
(22) Anmeldetag: 01.04.2016
(51) Int. Cl.: C09K 8/80

(54) **VERFAHREN ZUR BESCHICHTUNG VON STÜTZMITTELN MIT MODIFIZIERTEN REAKTIVHARZZUSAMMENSETZUNGEN, BESCHICHTE STÜTZTMITTEL UND VERWENDUNG DER BESCHICHTETEN STÜTZMITTEL IN FRACKING-FÖRDERVERFAHREN**
METHOD FOR COATING SUPPORT AGENTS WITH MODIFIED REACTIVE RESIN COMPOSITIONS, COATED SUPPORT MEANS AND USE OF THE COATED SUPPORT MEANS IN FRACKING-CONVEYING METHODS
PROCÉDÉ DE REVÊTEMENT D'AGENTS DE SOUTÈNEMENT À L'AIDE DE COMPOSITIONS DE RÉSINE RÉACTIVE MODIFIÉES, AGENTS DE SOUTÈNEMENT AINSI REVÊTUS ET UTILISATION DESDITS AGENTS DE SOUTÈNEMENT REVÊTUS DANS DES PROCÉDÉS D'EXTRACTION PAR FRACTURATION HYDRAULIQUE

(43) Veröffentlichungstag der Anmeldung: 06.02.2019
(73) Patentinhaber: Wacker Chemie AG, 81737 München (DE)
(72) Erfinder: KNÖR, Sebastian, 84547 Emmerting (DE); CALIMENTE, Daniel, Saline, Michigan 48176 (US); SCHLOSSER, Arndt, 84533 Stammham (DE)
(74) Vertreter: Mieskes, Klaus Theoderich
(86) Internationale Anmeldenummer: PCT/EP2016/057235
(87) Internationale Veröffentlichungsnummer: WO 2017/167396

(56) Entgegenhaltungen:
- EP-A1- 2 623 579
- US-A- 5 422 183
- US-A1- 2007 036 977
- US-A1- 2008 006 405
- US-A1- 2014 162 911

## Beschreibung

Die vorliegende Erfindung betrifft ein Verfahren zur Beschichtung von Stützmittel mit modifizierten Reaktivharzzusammensetzungen, und ihre Verwendung im sogenannten Hydraulic Fracturing (=Fracking).

Das Fracking-Verfahren wird in der Erdöl- und Erdgasförderung eingesetzt und ist eine Methode zur Erzeugung, Weitung und Stabilisierung von Rissen im Gestein einer Lagerstätte im tiefen Untergrund, mit dem Ziel, die Permeabilität der Lagerstätten-gesteine zu erhöhen. Dadurch können darin befindliche Gase oder Flüssigkeiten leichter und beständiger zur Bohrung fließen und gewonnen werden.

Die erzeugten Risse müssen mit Stützmitteln offengehalten werden. Die derzeit verfügbaren, beschichteten oder unbeschichteten Stützmittel sind spröde und weisen nicht die notwendige Druckfestigkeit für die Förderung in großen Tiefen auf. Durch das Brechen des Stützmittels unter dem hohen Druck werden Feinteile frei, die die Risse verstopfen und die Öl- bzw. Gasfördermenge reduzieren.

Die nach dem Stand der Technik verfügbaren beschichteten Stützmittel weisen eine im Vergleich zu den unbeschichteten Stützmitteln verbesserte Beständigkeit auf. Der Effekt der Beschichtung, z.B. mit organischen Harzen, ist aber dadurch limitiert, dass die verfügbaren Beschichtungen selbst sehr spröde sind und ebenfalls zum Bruch bzw. zur Abplatzung neigen.

### Stand der Technik

WO2008088449 A2 offenbart eine Möglichkeit zur Verringerung der Sprödigkeit von Beschichtungen solcher Partikel, wobei thermisch härtende Reaktivharze wie beispielsweise Epoxy-Harze mit Block-Copolymeren und Haftvermittlern versetzt werden, um so eine Verbesserung der Schlagzähigkeit der Beschichtung zu erreichen. Nachteilig ist neben der Verwendung zweier Additive, dass der Zähigkeitsverbesserer zudem ein teures und aufwändig herzustellendes Blockpolymere ist.

US2012088699A schlägt vor Partikel mit mindestens zwei oleophilen und hydrophoben Harzen zu beschichten beispielsweise Epoxyharze und Silconharze. Die so beschichteten Partikel verbessern die Ölausbeute und reduzieren die Menge an gefördertem Wasser. Die Verwendung von Siliconharzen macht diese Partikel teuer.

US8852682B2 offenbart Partikel zum Einsatz als Stützmaterialien, die eine mehrschichte ineinander verschachtelte Beschichtung aufweisen. Ein Füllstoff wird explizit während der einzelnen Prozessschritte zudosiert. Nachteilig ist das aufwändige Verfahren. Zur Beschichtung werden verschiedene Harze wie beispielsweise Phenolharze verwendet die beispielweise als verstärkende Füllstoffe pyrogene Kieselsäuren enthalten.

US5422183A offenbart Partikel zum Einsatz als Stützmaterialien in Fracking-Verfahren, die ebenfalls eine zweischichte Beschichtung aus Harzen aufweisen. Zur Beschichtung werden beispielsweise Phenolharze verwendet, wobei als Füllstoff ebenfalls pyrogene Kieselsäuren eingesetzt wird. Dieser wird nach dem ersten Coating-Schritt in die Zwischenphase der Einzelschichten eingebracht. Nachteilig bei beiden Schriften ist das sehr aufwändige, mehrstufige Verfahren, das teuer und zudem schwer zu kontrollieren ist.

US20140124200A offenbart die Verwendung von Hybridmaterialien hergestellt durch chemische Verbindung von organischen Harzen und Siliconharzen zur Beschichtung von Stützmaterialen. Nachteilig ist die Verwendung teurer Siliconharze, ein zusätzlicher, aufwendiger Prozess zur chemischen Modifikation und die schwer zu kontrollierende Produktqualität bei Reaktion zweier verzweigter Polymeren.

Weiterhin sind im Stand der Technik Verfahren allgemein bekannt, die zur Verringerung der Sprödigkeit von Beschichtungen führen. WO2010060861A1 beschreibt beispielsweise, ein homogenes Reaktionsharz, das eine Verbesserung der mechanischen Eigenschaften Bruchzähigkeit und Schlagzähigkeit als ausgehärteter duroplastischer Kunststoff zeigt. Dabei wird beispielsweise in einem ungehärteten Epoxidharz mindestens ein Organopolysiloxan homogen verteilt mit Hilfe eines Siliconorganocopolymer welches als Dispergiermittel dient.

D1 US2014/162911A1 offenbart Stützmaterialien, welche mit Zusammensetzungen beschichtet werden die Füllstoffe enthalten, welche chemisch an das Polymer binden. Dies erfolgt über reaktiven Gruppen durch Ausbildung kovalenter Bindungen von funktionalisierten Füllstoffen oder die zwingende Verwendung von Haftvermittlern bei nicht-funktionalisierten Füllstoffen.

D2 US2008/006405A1 offenbart ein Verfahren zur Herstellung von Stützmaterialien für Fracking-Verfahren, wobei Verfestigungsemulsionen zum Einsatz kommen, welche ein wässriges Fluid, ein definiertes Amintensid und ein Verfestigungsmittel enthalten.

D3 EP2623579A1 offenbart hydrophobe Stützmaterialien, welche auf der Oberfläche ihrer Harzhülle mittels mit einer Mikro-Nano Struktur modifiziert wurden.

### Aufgabe der Erfindung

Aufgabe der vorliegenden Erfindung war daher die Bereitstellung von einem kostengünstigen Verfahrens zur Beschichtung von Stützmittel und die beschichteten Stützmittel selbst. Dabei sollen diese Stützmittel nach Beschichtung und Aushärtung die notwendige Härte aufweisen und gleichzeitig elastische Eigenschaften wie gute Schlagzähigkeit zeigen, damit es zu keinem Bruch oder zu Abplatzungen der Beschichtung kommt.

### Lösung der Aufgabe

Diese Aufgabe wird überraschenderweise gelöst von dem erfindungsgemäßen Verfahren zur Herstellung von beschichteten Stützmitteln, wobei eine Reaktivharzzusammensetzung in fließfähiger Form,
- zusammen mit oder ohne mindestens einem Härter (C) und
- mit oder ohne mindestens einem Additiv (D),
   auf das Stützmittel aufgebracht wird
   und anschließend ausgehärtet wird,
   dadurch gekennzeichnet, dass
   die Reaktivharzzusammensetzung
- (A) 88-97,5 Gew.% mindestens eines Reaktivharzes, und
- (B) mindestens 2,5 Gew.% mindestens einer hydrophob modifizierten pyrogenen Kieselsäure mit einer BET-Oberfläche nach DIN ISO 9277 / DIN 66132 zwischen 20 und 600 m²/g und mit einem Kohlenstoffgehalt nach DIN EN ISO 3262-20 von 0-15 Gew.-%,
enthält.

Vorzugsweise liegt der kritische Spannungsintensitätsfaktor also der K1c-Wert der erfindungsgemäßen Reaktivharzzusammensetzung bei mindestens 0,55 MN/m^{3/2}, bevorzugt mindestens 0,6 MN/m^{3/2}, besonders bevorzugt mindestens 0,70 MN/m^{3/2}. Dieser Wert beurteilt die Rissanfälligkeit von Werkstoffen. Umso höher dieser Wert ist, desto weniger kommt es zu einer Rissfortpflanzung.

Die Bestimmung des K1c-Wertes erfolgte gemäß ASTM D 5045 an Kompaktzugkörpern (CT-Prüfkörper) mit W = 35 mm und einer Abzugsgeschwindigkeit von 1 mm/min. Die CT-Prüfkörper mit Dicke 4,5 mm wurden mittels CNC Fräse hergestellt und ein Anriss von 3 mm wurde mit einer Klinge geschaffen.

Die für das erfindungsgemäße Beschichtungsverfahren eingesetzten Reaktivharzzusammensetzungen enthalten mindestens die Komponenten (A) und (B).

### Komponente (A)

Bevorzugt enthält die erfindungsgemäße Reaktivharzzusammensetzung nur ein Reaktivharz (A).

Die Reaktivharze (A) müssen eine feste nichtklebrige Beschichtung bei Umgebungstemperaturen bilden. Dies ist erforderlich, damit die beschichteten Partikel rieselfähig bleiben, so dass sie sich nicht unter normalen Lagerbedingungen agglomerieren. Die Beschichtung kann im Wesentlichen ausgehärtet werden, so dass wenig oder keine Vernetzung bei Einwirkung von Bedingungen im Bohrloch erfolgt. Die Beschichtung kann auch nur teilweise gehärtet werden oder mit anderen reaktiven Gruppen versehen werden, sodass eine kovalente Vernetzung unter den Bedingungen im Bohrloch erfolgt.

Als Reaktionsharze (A) sind erfindungsgemäß alle polymeren oder oligomeren organischen Verbindungen geeignet, die mit einer für eine Härtungsreaktion ausreichenden Zahl geeigneter reaktiver Gruppen versehen sind. Dabei sind alle im Stand der Technik bekannten Reaktionsharze geeignet, die sich zu Duroplasten verarbeiten lassen, unabhängig vom jeweiligen Vernetzungsmechanismus, der bei der Härtung des jeweiligen Reaktionsharzes abläuft. Grundsätzlich lassen sie sich in drei Gruppen einteilen entsprechend der Art des Vernetzungsmechanismus durch Addition, Kondensation oder radikalische Polymerisation.

Aus der ersten Gruppe der durch Polyaddition vernetzten Reaktionsharze (A) werden bevorzugt ein oder mehrere Epoxidharze, Urethanharze und/oder lufttrocknende Alkydharze als Ausgangsmaterial ausgewählt. Epoxid-und Urethanharze werden in der Regel durch Zusatz stöchiometrischer Mengen eines Hydroxyl-, Amino-, Carboxyl- oder Carbonsäureanhydridgruppen enthaltenden Härters vernetzt, wobei die Härtungsreaktion durch Addition der Oxiran- bzw. Isocyanatgruppen des Harzes an die entsprechenden Gruppen des Härters erfolgt. Bei Epoxidharzen ist auch die sogenannte katalytische Härtung durch Polyaddition der Oxirangruppen selbst möglich. Lufttrocknende Alkydharze vernetzen durch Autoxidation mit Luftsauerstoff. Auch additionshärtende Siliconharze sind bekannt, vorzugsweise solche mit der Maßgabe, dass keine weiteren freien Silane enthalten sind.

Beispiele für die zweite Gruppe der durch Polykondensation vernetzten Reaktionsharze (A) sind vorzugsweise Kondensationsprodukte von Aldehyden, z.B. Formaldehyd, mit amingruppenhaltigen aliphatischen oder aromatischen Verbindungen, z.B. Harnstoff oder Melamin, oder mit aromatischen Verbindungen wie Phenol, Resorcin, Kresol usw., ferner Furanharze, gesättigte Polyesterharze und kondensationshärtende Silikonharze. Die Härtung erfolgt hierbei meist durch Temperaturerhöhung unter Abspaltung von Wasser, niedermolekularen Alkoholen oder anderen niedermolekularen Verbindungen.

Aus der dritten Gruppe der durch Polymerisation vernetzten Reaktionsharze sind ein oder mehrere Homo- oder Copolymerisate der Acrylsäure und/oder Methacrylsäure oder ihrer Ester, ferner ungesättigte Polyesterharze, Vinylesterharze und/oder Maleinimidharze als Ausgangsharze für die erfindungsgemäß modifizierten Reaktionsharze bevorzugt. Diese Harze weisen polymerisationsfähige Doppelbindungen auf, durch deren Polymerisation oder Copolymerisation die dreidimensionale Vernetzung bewirkt wird. Als Starter dienen zur Bildung freier Radikale befähigte Verbindungen, z.B. Peroxide, Peroxoverbindungen oder Azogruppen enthaltende Verbindungen.

Auch eine Initiierung der Vernetzungsreaktion durch energiereiche Strahlung, wie UV oder Elektronenstrahlung, ist möglich.

Nicht nur die vorstehend genannten Reaktionsharze (A), sondern auch alle anderen, die zur Herstellung von duroplastischen Kunststoffen geeignet sind, lassen sich in der erfindungsgemäß vorgeschlagenen Weise modifizieren und ergeben nach der Vernetzung und Härtung Duroplaste mit erheblich verbesserter Bruch- und Schlagzähigkeit, wobei andere wesentliche, für die Duroplasten charakteristische Eigenschaften, wie Festigkeit, Wärmeformbeständigkeit und Chemikalienresistenz, im Wesentlichen unbeeinflusst erhalten bleiben.

Die bevorzugten Reaktivharze (A) sind die Phenol-FormaldehydHarze. Diese Reaktivharze (A) umfassen wärmehärtende Phenolharze vom Resol-Typ und Phenol-Novolak-Harze, die durch Zugabe von Katalysator und Formaldehyd wärmereaktiv gemacht werden können. Die Reaktivharze (A) können entweder während der Beschichtung der Stützmittelpartikel vollständig ausgehärtet werden, oder nur teilweise gehärtet werden. Stützmittel mit nur teilweise gehärteter Beschichtung härten erst nach dem Einbringen in tiefere Erdschichten während des Fracking aus.

Besonders bevorzugt als Reaktivharze (A) sind Phenol-Novolak-Harze. Diese sind beispielsweise erhältlich bei Plastics Engineering Company, Sheboygan, USA, unter dem Namen Resin 14772. Wenn ein solches Reaktivharz verwendet wird, ist es erforderlich, dem Gemisch ein Vernetzungsmittel (C) hinzuzufügen, um die anschließende Aushärtung des Reaktivharzes zu bewirken. Hexamethylentetramin ist das bevorzugte Material als (C) für diese Funktion, da es sowohl als Katalysator und als Formaldehydquelle dient. (A) wird in Mengen von 88-97,5 Gew.-% eingesetzt.

### Komponente (B)

Kieselsäuren sind seit langem von diversen Herstellern kommerziell erhältlich.

(B) ist eine hydrophob modifizierten pyrogenen Kieselsäure mit großer BET-Oberfläche nach DIN ISO 9277 / DIN 66132 zwischen 20 und 600 m²/g, bevorzugt zwischen 20 und 400 m²/g, und insbesondere bevorzugt zwischen 100 und 400 m²/g.

(B) ist eine hydrophob modifizierte pyrogene Kieselsäure mit einem Kohlenstoffgehalt nach DIN EN ISO 3262-20 von 0-15 Gew.-%, vorzugsweise mit einem Kohlenstoffgehalt von 0-2,1 Gew.-%.

Dem Fachmann sind hydrophobierte Kieselsäuren seit langem bekannt. Bevorzugt kann die Hydrophobierung mittels halogenfreier Silane erfolgen, wie beispielsweise in EP1433749A1 beschrieben.

Beispiele für hydrophile Kieselsäuren (B) sind HDK® N 20, HDK® D05 und HDK® T30 (käuflich erhältlich bei der Wacker Chemie AG, München), AEROSIL® 200 (käuflich erhältlich bei der Fa. Evonik Degussa GmbH, Frankfurt am Main) und Cab-O-Sil® LM 150 (käuflich erhältlich bei Cabot GmbH, Rheinfelden).

Beispiele für im Handel erhältliche hydrophobe Kieselsäuren sind HDK® H18 und HDK® H20 beladen mit der Gruppierung - [Si(CH₃)₂-O]ₙ, HDK® H2000 beladen mit der Gruppierung -O-Si(CH₃)₃ (käuflich erhältlich bei der Wacker Chemie AG, München) sowie AEROSIL® 972 und AEROSIL® 805 (käuflich erhältlich bei der Fa. Evonik Degussa GmbH, Frankfurt am Main).

Bevorzugt ist (B) eine hydrophobe modifizierte pyrogene Kieselsäure mit einem Restsilanol-Gehalt von mindesten 30%, bevorzugt mindestens 40%.

Die für das erfindungsgemäße Beschichtungsverfahren eingesetzten Reaktivharzzusammensetzungen können wie folgt hergestellt werden:
Dies erfolgt in einer Ausführungsform durch Dispergieren von (B) in bei 20°C fließfähiges (A) bzw. in (A) welches durch vorheriges Erhitzen auf bis 250°C fließfähig gemacht wurde bzw. in (A) welches in einem geeigneten Lösungsmittel gelöst wurde, um es fließfähig zu machen. Wenn ein Lösungsmittel eingesetzt wurde, kann dies danach eingedampft werden. Geeignete Lösungsmittel sind dem Fachmann bekannt und werden in Abhängigkeit des Reaktivharzes (A) ausgewählt. Beim Phenolharz sind geeignete Lösungsmittel beispielsweise Ethylacetat und Aceton. Welche Lösungsmittel für welche Reaktivharze geeignet sind, wird beispielsweise in folgendem Lehrbuch beschrieben: Polymer Handbook, Volume 2, 4. Ed.; J. Brandrup, E. H. Immergut, E. A. Grulke; John Wiley & Sons, Inc., 1999 (ISBN 0-471-48172-6).
Geeignete Mischer sind beispielsweise Laborrührer, Plantetenmischer, oder Dissolver, oder Rotor-Stator-Systeme, oder auch Extruder, Walzen, 3-Walzen-Stuhl, etc.

Dem Fachmann sind diverse Möglichkeiten zur Beschichtung von Stützmitteln mit Harzen aus dem Stand der Technik bekannt. Diese Verfahren können auch für die Beschichtung von Stützmitteln mit den vorliegenden erfindungsgemäßen Reaktivharzzusammensetzungen eingesetzt werden.

In einer bevorzugten Ausführungsform wird die erfindungsgemäße Reaktivharzzusammensetzung in fließfähiger Form - also bereits bei 20°C fließfähig oder durch Erhitzen bis 250°C aufgeschmolzen und daher fließfähig oder in einem geeigneten Lösungsmittel gelöst und daher fließfähig - zusammen mit oder ohne mindestens einem Härter (C) und mit oder ohne mindestens einem Additiv (D), auf das Stützmittel aufgebracht beispielsweise durch Sprühen oder Mischen und anschließend ausgehärtet. Geeignete Lösungsmittel werden bereits weiter oben beschrieben.

In einem weiteren alternativen Herstellverfahren für erfindungsgemäß beschichtete Stützmittel wird (A) mit einem geeigneten Lösemittel, Stützmittel und (B) gemischt und somit fließfähig gemacht. Der Mischung kann optional Härter (C) und evtl. verschiedene Additive (D) zugegeben werden. Anschließend wird das Lösungsmittel abgedampft und die so beschichteten Stützmittel werden gehärtet. Die Reihenfolge der Zugabe der Komponenten (A), (B), (C) und (D) ist variabel.

In einer besonders bevorzugten möglichen Ausführungsform wird ein geeignetes Stützmittel wie beispielsweise Sand auf ca. 170 - 260 °C vorgeheizt. In einem Mischer wird dann die erfindungsgemäße Reaktivharzzusammensetzung, ein geeigneter Härter (C) und optional verschiedene Additive (D) zugegeben.

Bei einer anderen Alternative wird ein geeignetes Stützmittel wie beispielsweise Sand auf ca. 170 - 260 °C vorgeheizt. In einem Mischer wird dann (A), (B), ein geeigneter Härter (C) und optional verschiedene Additive (D) zugegeben.

Die Erzeugung von Schichten ist wie folgt zu verstehen: Mehreren Schichten werden in mehreren aufeinanderfolgenden Beschichtungs- und Härtungszyklen erzeugt. D.h., dass nach dem Benetzen der Oberfläche des Stützmittels mit der erfindungsgemäßen Reaktivharzzusammensetzung diese Schicht zunächst teilweise oder vollständig gehärtet wird. Anschließend wird eine neue Schicht der erfindungsgemäßen Reaktivharzzusammensetzung aufgebracht und erneut teilweise oder vollständig gehärtet.

Dem gegenüber steht das Aufbringen der erfindungsgemäßen Reaktivharzzusammensetzung portionsweise in mehreren Schritten ohne eine substanzielle Zwischenhärtung der einzelnen Portionen und erst am Schluss erfolgt eine teilweise oder vollständige Härtung. Dies führt somit nur zu einer einzelnen Schicht.

### Stützmittel

Geeignete Stützmittel sind dem Fachmann aus dem Stand der Technik seit langem bekannt und können für die erfindungsgemäße Beschichtung eingesetzt werden. Stützmittel sind üblicherweise harte, hochfeste Teilchen wie beispielsweise Sand oder Kies aus Gesteinen wie Kalkstein, Marmor, Dolomit, Granit usw., aber auch Glasperlen, Keramikpartikel, Keramikkugeln und dergleichen, wobei diese Liste beispielhaft und nicht beschränkend ist. Bevorzugt zeigen die Stützmittelpartikel eine im Wesentlichen sphärische also kugelförmige Form, da diese genügend Zwischenraum lassen, damit das Rohöl bzw. Gas vorbeiströmen kann. Daher wird grobkörniger Sand, Glasperlen und Glashohlkugeln (sogenannte Microballons) als Stützmittel bevorzugt. Besonders bevorzugt wird Sand als Stützmittel verwendet.

Bevorzugt weisen die Stützmittelteilchen eine durchschnittliche Größe von 5.000 bis 50 µm auf, besonders bevorzugt eine durchschnittliche Größe von 1.500 bis 100 µm. Zudem zeigen sie bevorzugt ein Seitenverhältnis von Länge zu Breite von höchstens 2 : 1.

### Härter (C)

Geeignete Härter sind dem Fachmann aus dem Stand der Technik seit langem bekannt und werden entsprechend des verwendeten Reaktivharzes ausgewählt. Ein bevorzugter Härter (C) für Novolake ist Urotropin. (C) und somit auch Urotropin wird typischerweise in Mengen zwischen 8 und 20 Gew.-% bezogen auf die Menge an erfindungsgemäßer Reaktivharzzusammensetzung eingesetzt. Vorzugsweise wird Urotopin als wässrige Lösung auf die Schmelze des Reaktivharzes appliziert. Solche Methoden sind dem Fachmann ebenfalls bekannt und beispielsweise in US4732920 beschrieben.

### Additiv (D)

Geeignete Additive (D) sind dem Fachmann aus dem Stand der Technik ebenfalls seit langem bekannt. Nicht abschließende Beispiele sind Anti-Statik-Mittel, Trennmittel, Haftvermittler usw.

Geeignete Stützmittel, Härter (C) und Additive (D) werden beispielsweise in US4732920 und US2007/0036977 A1 beschrieben.

Für eine optimale Performance des erfindungsgemäß beschichteten Stützmittels müssen Typ und Spezifikation des Stützmittels, Typ und Spezifikation des Reaktivharzes (A), Kieselsäure (B), Härter (C) und ggf. Additive (D), die Art des Misch- und Beschichtungsprozesses, die Reihenfolge der Zugabe der Komponenten und die Mischzeiten je nach Anforderung der spezifischen Anwendung aufeinander abgestimmt werden. Eine Veränderung des Stützmittels erfordert unter Umständen eine Anpassung des Beschichtungsprozesses und / oder der verwendeten Härter (C) und Additive (D).

Ein weiterer Gegenstand sind somit auch die gemäß den oben beschriebenen Verfahren erhältlichen erfindungsgemäß beschichteten Stützmittel.

Bei den erfindungsgemäßen Stützmittel kann die Oberfläche des Stützmittels ganz oder teilweise beschichtet sein. Bevorzugt erscheinen bei der Untersuchung mit dem Rasterelektronenmikroskop mindesten 20% der sichtbaren Oberfläche des Stützmittels mit der erfindungsgemäßen Reaktivharzzusammensetzung beschichtet, besonders bevorzugt mindestens 50%.
Bevorzugt erscheinen bei der Untersuchung mit dem Rasterelektronenmikroskop mindestens 5% der StützmittelTeilchen auf ihrer sichtbaren Seite vollständig umhüllt, besonders bevorzugt mindestens 10%.
Der wesentliche Teil der Beschichtung auf dem erfindungsgemäßen Stützmittel ist 0,1 bis 100 µm dick, bevorzugt 0,1 bis 30 µm, besonders bevorzugt 1 bis 20 µm.

Bevorzugt sind die erfindungsgemäßen Stützmittel mit weniger als drei Schichten der erfindungsgemäßen
Reaktivharzzusammensetzung beschichtet, besonders bevorzugt mit nur einer Schicht.

Im erfindungsgemäßen Verfahren wird die Reaktivharzzusammensetzung bevorzugt in Mengen von 0,1-20 Gew.-% bezogen auf das Gewicht des Stützmittels eingesetzt, bevorzugt von 0,5-10 Gew.-% und insbesondere bevorzugt von 1-5 Gew.-%.

Ein weiterer Gegenstand der vorliegenden Erfindung ist die Verwendung der erfindungsgemäß beschichteten Stützmittel in Fracking-Förderverfahren für Erdöl und Erdgas.

### Vorteile der Erfindung

Völlig überraschend zeigt sich, dass die erfindungsgemäßen Reaktivharzzusammensetzungen Vorteile in Beschichtung von Stützmittel zeigen, da der Ausschuss durch Verkleben des erfindungsgemäßen Stützmittels merklich reduziert wird.

Die gehärtete erfindungsgemäße Reaktivharzzusammensetzung und damit das damit beschichtete Stützmittel weist eine verbesserte Zähigkeit, Elastizität und Verformbarkeit bei gleicher Härte auf. Dadurch ist sie widerstandsfähiger gegenüber Belastungen, wie Schläge, Verformung oder Druck und hat eine geringere Neigung zu brechen.

Die erfindungsgemäße Reaktivharzzusammensetzung weist als gehärtete Beschichtung für Stützmittel eine verbesserte Bruchfestigkeit, Zähigkeit und Elastizität auf. Die Beschichtung hat eine verringerte Neigung zu Brechen und Abplatzen und schützt das Stützmittel wirkungsvoller und dauerhafter vor hohen Drücken und Schlägen. Somit verbessert sich die Beständigkeit des gesamten Stützmittels. Herkömmliche Stützmittel gemäß dem Stand der Technik sind sehr spröde und haben eine große Neigung zu brechen. Durch Bruch des Stützmittels werden Feinanteile freigesetzt. Eine Freisetzung der Feinanteile wirkt sich negativ auf die Durchströmrate des Rohöls oder Gases aus, dadurch dass die Zwischenräume zwischen den Stützmittel-Körner verstopft werden und somit die Öl- bzw. Gasquelle schnell unrentabel wird. Neue Bohrungen oder Refracking werden erforderlich.

Demgegenüber sind die erfindungsgemäßen beschichteten Stützmittel widerstandsfähiger gegenüber Belastungen, wie Schläge, Verformung oder Druck und haben somit eine geringere Neigung zu brechen.

Ein weiterer Vorteil der erfindungsgemäßen Beschichtung liegt in Ihrer Verformbarkeit, sodass diese häufig beim Bruch der spröden Stützmittel-Körner selber nicht bricht und somit die entstehenden Feinanteile wie eine plastischen Hülle umschließt oder zusammenhält und damit insgesamt deren Freisetzung reduziert wird.

Durch diese vorteilhaften Eigenschaften der erfindungsgemäß beschichteten Stützmittel kann der Öl- bzw. Gasfluss länger aufrechterhalten werden. Daraus ergeben sich entscheidende wirtschaftliche Vorteile und im Umweltschutz.

### Beispiele

Die nachfolgenden Beispiele erläutern die Erfindung, ohne dabei beschränkend zu wirken. In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000hPa, und bei Raumtemperatur, also bei 25°C, bzw. bei einer Temperatur, die sich beim Zusammengeben der Reaktanden bei Raumtemperatur ohne zusätzliche Heizung oder Kühlung einstellt, durchgeführt. Im Folgenden beziehen sich alle Viskositätsangaben auf eine Temperatur von 25°C.

### Verwendete Abkürzungen

Die Bedeutung der weiter oben verwendeten Abkürzungen gilt auch für die Beispiele:
- PTFE: = Polytetrafluorethylen
- UpM: = Umdrehungen pro Minute

### Beispiel 1 (nicht erfindungsgemäß)

In einem MOLTENI LABMAX mit Abstreifer und Dissolverscheibe wurden 450 g Novolak "Resin 14772" (Plastics Engineering Company, Sheboygan, USA) auf 130 °C aufgeheizt und unter Durchleiten von Stickstoff aufgeschmolzen.

Nachdem alles geschmolzen war, wurde bei Behälterantrieb von 10 U/min und Dissolverdrehzahl von ca. 500 U/min für ca. 10 min gerührt. Nun wurden 50 g HDK® N20 (hydrophile Kieselsäure mit BET-Oberfläche 170-230 m²/g; zu beziehen bei Wacker Chemie AG) portionsweise (kleine Schaufel, ca. 50 - 100 mL Volumen) eingearbeitet und jeweils ca. 2 min bei 500 U/min gerührt. Nachdem die gesamte HDK zugegeben war, wurde die Drehzahl des Dissolvers auf 4500 U/min erhöht und dann 10 min nachgerührt. Anschließend wurde die noch heiße Masse auf eine PTFE-Folie gegossen und mechanisch zerkleinert. Die Temperatur betrug nach dem Homogenisieren 165 °C. Nach dem Abkühlen wurde ein karamellfarbener, geruchloser Feststoff erhalten.

### Beispiel 2 (nicht erfindungsgemäß)

Nach dem Verfahren von Beispiel 1 wurden 50 g HDK® T30 (hydrophile Kieselsäure mit BET-Oberfläche 270-330 m²/g; zu beziehen bei Wacker Chemie AG, München, Deutschland) eingearbeitet und mechanisch zerkleinert. Die Temperatur betrug nach dem Homogenisieren 171 °C. Nach dem Abkühlen wurde ein karamellfarbener, geruchloser Feststoff erhalten.

### Beispiel 3 (nicht erfindungsgemäß)

Nach dem Verfahren von Beispiel 1 wurden 50 g Microsilica (hydrophile Kieselsäure mit BET-Oberfläche 25-60 m²/g) eingearbeitet und mechanisch zerkleinert. Die Temperatur betrug nach dem Homogenisieren 171 °C. Nach dem Abkühlen wurde ein karamellfarbener, geruchloser Feststoff erhalten.

### Beispiel 4

Nach dem Verfahren von Beispiel 1 wurden 50 g HDK® H20 (BET-Oberfläche der hydrophoben Kieselsäure vor Hydrophobierung von 170-230 m²/g; Kohlenstoffgehalt 1-1,8%; Oberflächenmodifizierung Dimethylsiloxy; zu beziehen bei Wacker Chemie AG) eingearbeitet und mechanisch zerkleinert. Die Temperatur betrug nach dem Homogenisieren 165 °C. Nach dem Abkühlen wurde ein karamellfarbener, geruchloser Feststoff erhalten.

### Beispiel 5

Nach dem Verfahren von Beispiel 1 wurden 50 g HDK® H18 (BET-Oberfläche der hydrophoben Kieselsäure vor Hydrophobierung von 170-230 m²/g; Kohlenstoffgehalt 4-5,2%; Oberflächenmodifizierung Poly-Dimethylsiloxy; zu beziehen bei Wacker Chemie AG) eingearbeitet und mechanisch zerkleinert. Die Temperatur betrug nach dem Homogenisieren 172 °C. Nach dem Abkühlen wurde ein hellgelber, geruchloser Feststoff erhalten.

### Beispiel 6

Nach dem Verfahren von Beispiel 1 wurden 50 g HDK® H2000 (BET-Oberfläche der hydrophoben Kieselsäure vor Hydrophobierung von 170-230 m²/g; Kohlenstoffgehalt 2,3-3,2%; Oberflächenmodifizierung Trimethylsiloxy; zu beziehen bei Wacker Chemie AG) eingearbeitet und mechanisch zerkleinert. Die Temperatur betrug nach dem Homogenisieren 148 °C. Nach dem Abkühlen wurde ein hellgelber, geruchloser Feststoff erhalten.

### Beispiel 7 (nicht erfindungsgemäß)

Nach dem Verfahren von Beispiel 1 wurden 475 g Novolak "Resin 14772" (Plastics Engineering Company, Sheboygan, USA) aufgeschmolzen und 25 g HDK® N20 (hydrophile Kieselsäure mit BET-Oberfläche 170-230 m²/g; zu beziehen bei Wacker Chemie AG) eingearbeitet und mechanisch zerkleinert. Die Temperatur betrug nach dem Homogenisieren 145 °C. Nach dem Abkühlen wurde ein hellgelber, geruchloser Feststoff erhalten.

### Vergleichsbeispiel 1 (V1)

Nach dem Verfahren von Beispiel 1 wurden 50 g SILBOND® 600 TST (Quarzmehl mit BET-Oberfläche 3 m²/g; Oberflächenmodifizierung Dimethylsiloxy; zu beziehen bei Quarzwerke GmbH, 50226 Frechen) eingearbeitet und mechanisch zerkleinert. Die Temperatur betrug nach dem Homogenisieren 148 °C. Nach dem Abkühlen wurde ein dunkelbrauner, geruchloser Feststoff erhalten.

### Vergleichsbeispiel 2 (V2)

Als Vergleichsbeispiel V2 dient nicht-modifiziertes Novolak "Resin 14772" (Plastics Engineering Company, Sheboygan, USA).

Eine optimale Druckstabilität des beschichteten Füllstoffes erfordert eine exakte Abstimmung der Art des verwendeten Stützmittels, der Art und Menge des verwendeten Harzes, des/der verwendeten Additive, der Menge an Härter und des Beschichtungsverfahrens. Durch das Einmischen eines Füllstoffes in das Phenolharz ändern sich dessen Eigenschaften sehr deutlich. Abhängig von der Art, der Hydrophilie und der BET Oberfläche des Füllstoffes, müsste für eine aussagekräftige Untersuchung der Druckstabilität von beschichteten Stützmitteln für jede Kieselsäure das Gesamtsystem neu optimiert werden.

Um die Vorteile unterschiedlicher Kieselsäuren isoliert betrachten zu können wurden Q-PANEL-Prüfbleche mit einer definierten Beschichtung der erfindungsgemäß modifizierten Phenolharze aus den Beispielen 1 - 7 und des nicht erfindungsgemäß modifizierten Phenolharzes aus dem Vergleichsbeispiel V1 und des nicht erfindungsgemäßen, nicht modifizierten Phenolharzes aus dem Vergleichsbeispiel V2 beschichtet.

Zur Prüfung der Widerstandsfähigkeit wurde mittels Kugelschlag-Prüfer getestet. Man erhält eine Aussage zur Elastizität, Schlagzähigkeit und Bruchfestigkeit der Beschichtung.

### Beispiel 8

### Herstellung von Reaktivharz-Lösungen zur Herstellung von Prüfkörper und Beschichtung von Q-PANEL-Prüfblechen:

Es wurden jeweils 10 Teile der erfindungsgemäßen, modifizierten Phenolharze aus den Beispielen 1 - 7, bzw. 10 Teile des nicht-erfindungsgemäßen, modifizierten Phenolharzes aus dem Vergleichsbeispiel V1 bzw. 10 Teile des reinen, nicht-erfindungsgemäßen, nicht-modifizierten Phenolharzes Resin 14772 (Plastics Engineering Company, Sheboygan, USA), mit jeweils 1 Teil Urotropin und 10,0 Teile Ethylacetat (Fa. Bernd Kraft, >= 99 %) durch Schütteln über Nacht gelöst.

### Beispiel 9

### Herstellung von mit Phenolharz beschichteten Q-PANEL-Prüfblechen:

Für die Versuche zur Sprödigkeitsbestimmung wurden Q-PANEL-Prüfbleche auf der gebürsteten Seite 3 x mit Aceton gereinigt und dann 1 h im Abzug abgelüftet. Anschließend wurde auf jedes Blech jeweils 3 mL der entsprechenden Phenolharzlösung aus Beispiel 8 gegeben und mit einem 100 µm-Rakel aufgestrichen und anschließend wurde das Lösemittel im Abzug über Nacht abgedampft.

Zur Härtung wurden die Proben in einen kalten Trockenschrank gelegt, innerhalb von 3 Stunden unter Spülung mit Stickstoff auf 160 °C aufgeheizt, 2 h bei dieser Temperatur gehalten und über Nacht auf 23 °C abgekühlt.

Nach dem Abdampfen des Lösungsmittels entsteht eine ca. 50 µm dicke gehärtete Harzschicht auf dem Blech.

### Beispiel 10

### Prüfung der Widerstandsfähigkeit:

Zum Nachweis der verbesserten Eigenschaften, also der Zähigkeit und Widerstandsfähigkeit gegen Schläge und Drücke, wurde nach Beispiel 8 und 9 eine jeweils ca. 50 µm dicke, gehärtete Schicht der erfindungsgemäßen Harze aus den Beispielen 1-3, 5 und 7 auf einem Q-PANEL-Prüfblech hergestellt, bzw. als Vergleichsbeispielen eine ca. 50 µm dicke, gehärtete Schicht des nicht-modifiziertes Harz Resin 14772 (Plastics Engineering Company, Sheboygan, USA) und des nicht-erfindungsgemäßen Harzes aus dem Vergleichsbeispiel V1. Die beschichteten Bleche wurden an einem Erichsen Kugelschlagprüfgerät, Modell 304-ASTM geprüft und die Ergebnisse durch einen geschulten Prüfer visuell ausgewertet: Dazu wird aus definierter, variabler Fallhöhe eine Kugel auf die Rückseite des Blechs fallen gelassen (jeweils Doppelversuche an unterschiedlicher Stelle). Die Schlagenergie ergibt sich aus der Fallhöhe multipliziert mit Fallgewicht, angegeben in Nm[inch (=in) x pounds (=lbs)]. Die Schlagenergie wird wie folgt verändert: 0,56[5], 1,13[10], 1,69[15], 2,26[20], 2,82[25], 3,39[30], 3,95[35], 4,52[40] Nm[(in x lbs)]. Die gebeulten Schlagstellen werden visuell auf Sprünge und Risse untersucht und relativ zur Referenz bewertet.

Tabelle 1 zeigt die Bewertung der Harz-Beschichtung auf Q-PANEL-Prüfblechen und deren Widerstandsfähigkeit mittels Kugelschlagprüfgerät.

**Tabelle 1**

| Harz aus Beispiel | Siloxan-Additiv | Beschreibung | Bewertung |
|---|---|---|---|
| 1 | HDK® N20 (10%, w/w) | Keine Rissbildung und Abplatzungen bis 4,52 Nm [40 in x lbs] | 5 |
| 7 | HDK® N20 (5%, w/w) | Rissbildung ab 2,82 Nm [25 in x lbs], keine Abplatzungen bis 4,52 Nm [40 in x lbs] | 4 |
| 2 | HDK® T30 (10%, w/w) | Keine Rissbildung und Abplatzungen bis 4,52 Nm [40 in x lbs] | 5 |
| 3 | Microsilica (10%, w/w) | Rissbildung bei 1,13 Nm [10 in x lbs] und Abplatzungen ab 2,82 Nm [25 in x lbs] | 2 |
| 5 | HDK® H18 (10%, w/w) | Rissbildung bei 1,13 Nm [10 in x lbs] und Abplatzungen ab 1,13 Nm [10 in x lbs] | 1 |
| V1 | SILBOND® 600 TST (10%, w/w) | Rissbildung und Abplatzungen ab 0,56 Nm [5 in x lbs] | 0 |
| V2 | kein Additiv | Rissbildung und Abplatzungen ab 0,56 Nm [5 in x lbs] | 0 |

Die Ergebnisse des Kugelschlagprüfgeräts wurden in einer Skala von 0 bis 5 bewertet, wobei 0 das schlechteste Ergebnis und 5 das beste Ergebnis bedeutet.

Es zeigt sich, dass die erfindungsgemäße, gehärtete Beschichtung mit dem Harz aus Beispiel 5 eine wesentlich verbesserte Elastizität, Schlagzähigkeit und Bruchfestigkeit im Vergleich zum nicht-modifiziertem Vergleichsbeispiel V2 und zum nicht-erfindungsgemäß modifizierten Vergleichsbeispiel V1 aufweisen.

## Patentansprüche

1. Verfahren zur Herstellung von beschichteten Stützmitteln, wobei eine Reaktivharzzusammensetzung in fließfähiger Form,
- zusammen mit oder ohne mindestens einem Härter (C) und
- mit oder ohne mindestens einem Additiv (D),
auf das Stützmittel aufgebracht wird
und anschließend ausgehärtet wird,
**dadurch gekennzeichnet, dass**
die Reaktivharzzusammensetzung
- (A) 88-97,5 Gew.% mindestens eines Reaktivharzes, und
- (B) mindestens 2,5 Gew.% mindestens einer hydrophob modifizierten pyrogenen Kieselsäure mit einer BET-Oberfläche nach DIN ISO 9277 / DIN 66132 zwischen 20 und 600 m²/g und mit einem Kohlenstoffgehalt nach DIN EN ISO 3262-20 von 0-15 Gew.-%,
enthält.

2. Verfahren gemäß Anspruch 1, **dadurch gekennzeichnet, dass** (B) ausgewählt wird aus hydrophob modifizierten pyrogenen Kieselsäuren mit einem Kohlenstoffgehalt nach DIN EN ISO 3262-20 von 0-2,1 Gew.-%.

3. Verfahren gemäß einem der Ansprüche 1 bis 2, **dadurch gekennzeichnet, dass** (B) eine BET-Oberfläche von 20 - 400 m²/g aufweist.

4. Verfahren gemäß einem der Ansprüche 1 bis 2, **dadurch gekennzeichnet, dass** (B) eine BET-Oberfläche von 100 bis 400 m²/g aufweist.

5. Beschichtetes Stützmittel erhältlich aus dem Verfahren gemäß Anspruch 1 bis 4.

6. Verwendung der beschichteten Stützmittel gemäß Anspruch 5 in Fracking-Förderverfahren für Erdöl und Erdgas.

## Claims

1. Method for producing coated proppants, where a reactive resin composition in flowable form,
- together with or without at least one hardener (C) and
- with or without at least one additive (D),
is applied to the proppant
and is then hardened,
**characterized in that**
the reactive resin composition comprises
- (A) 88-97.5% by weight of at least one reactive resin, and
- (B) at least 2.5% by weight of at least one hydrophobically modified fumed silica having a BET surface area to DIN ISO 9277/DIN 66132 of between 20 and 600 m²/g and having a carbon content to DIN EN ISO 3262-20 of 0-15% by weight.

2. Method according to Claim 1, **characterized in that** (B) is selected from hydrophobically modified fumed silicas having a carbon content to DIN EN ISO 3262-20 of 0-2.1% by weight.

3. Method according to either of Claims 1 and 2, **characterized in that** (B) has a BET surface area of 20 - 400 m²/g.

4. Method according to either of Claims 1 and 2, **characterized in that** (B) has a BET surface area of 100 to 400 m²/g.

5. Coated proppant obtainable from the method according to Claims 1 to 4.

6. Use of the coated proppants according to Claim 5 in fracking production methods for mineral oil and natural gas.

## Revendications

1. Procédé pour la préparation d'agents de soutènement revêtus, une composition de résine réactive sous forme fluide étant appliquée sur l'agent de soutènement,
- ensemble avec ou sans au moins un agent de durcissement (C) et
- avec ou sans au moins un additif (D),
et étant ensuite durcie,
**caractérisé en ce que** la composition de résine réactive contient
- (A) 88 à 97,5 % en poids d'au moins une résine réactive, et
- (B) au moins 2,5 % en poids d'au moins une silice pyrogénée modifiée de manière hydrophobe dotée d'une surface BET, selon la norme DIN ISO 9277/DIN 66132, comprise entre 20 et 600 m²/g et dotée d'une teneur en carbone, selon la norme DIN EN ISO 3262-20, de 0 à 15 % en poids.

2. Procédé selon la revendication 1, **caractérisé en ce que** (B) est choisi parmi des silices pyrogénées modifiées de manière hydrophobe dotées d'une teneur en carbone, selon la norme DIN EN ISO 3262-20, de 0 à 2,1 % en poids.

3. Procédé selon l'une quelconque des revendications 1 et 2, **caractérisé en ce que** (B) présente une surface BET de 20 à 400 m²/g.

4. Procédé selon l'une quelconque des revendications 1 et 2, **caractérisé en ce que** (B) présente une surface BET de 100 à 400 m²/g.

5. Agent de soutènement revêtu pouvant être obtenu par le procédé selon les revendications 1 à 4.

6. Utilisation des agents de soutènement revêtus selon la revendication 5 dans des procédés d'extraction par fracturation pour du pétrole et du gaz naturel.
